# EUROPEAN PATENT SPECIFICATION

(11) **EP 2 403 788 B1**
(45) Date of publication and mention of the grant of the patent: **18.09.2013**
(21) Application number: 10732413.9
(22) Date of filing: 01.03.2010
(51) Int. Cl.: B65G 47/82, B65G 17/26

(54) **PLANT WITH A TRANSFERRING SHUTTLE FOR FEEDING PRODUCTS TO A PACKAGING MACHINE**
ANLAGE MIT TRANSFERWAGEN FÜR DIE ZUFUHR VON PRODUKTEN ZU EINER VERPACKUNGSMASCHINE
INSTALLATION COMPRENANT UNE NAVETTE DE TRANSFERT DESTINÉE À AMENER DES PRODUITS À UNE MACHINE D'EMBALLAGE

(30) Priority: 05.03.2009 IT MI20090328
(43) Date of publication of application: 11.01.2012
(73) Proprietor: Eurosicma S.p.A., 20125 Milano (IT)
(72) Inventor: REDAELLI, Marco, 20060 Cassina de' Pecchi (IT)
(74) Representative: Cosenza, Simona
(86) International application number: PCT/IB2010/000413
(87) International publication number: WO 2010/100543

(56) References cited:
- EP-A- 1 602 584
- GB-A- 2 003 439
- IE-A2- 990 852

## Description

The present invention relates to an innovative plant for feeding groups of food products in sequence to a packaging machine, such as flow-pack or the like.

In plants for feeding packaging machines there is often the need of moving the products along two directions at a right angle, transferring them from one direction to the other while they are kept in a suitable group that must be packaged. For example, this may be needed in order to adapt the speed of arrival of the products to the speed of the packaging machine and/or the arrangement and the spacing of the products and of the groups of products. A typical situation is that of the packaging of biscuits, crackers or the like in piles or groups lined up and arranged side by side.

The operating speeds and the fragility of the food products make the transfer operations difficult. Systems with paddles or movable barriers are known, but often the return movement of the paddles hinders or slows down the plant operation, for example interfering with the movement of one or both conveyors.

Moreover, sliding of products, especially if arranged at the side, and the shocks for the insertion in the packaging machine conveyor may cause unacceptable damages and powders. European application EP-A-1602584 describes a plant with an input conveyor and an output conveyor parallel to one another and with a device for transferring the products from the first to the second conveyor, according to the preamble of claim 1.

The general object of the present invention is to obviate the above disadvantages by providing a feeding plant which should be fast, efficient and of reasonably limited cost and complexity.

In view of such an object it has been thought to devise, according to the invention, a plant for feeding food products in sequence to a packaging machine according to claim 1.

To make the description of the innovative principles of the present invention and the advantages thereof relative to the prior art clear, a possible exemplary embodiment applying such principles is described hereinafter with reference to the annexed drawings. In such drawings:
- figure 1 shows a schematic side elevation view of a feeding plant according to the present invention;
- figure 2 shows a partially cutaway view in a cross plane of the plant of figure 1;
- figures 3 to 11 show schematic views of an operating sequence of the plant of figure 1;
- figures 12 and 13 show views similar to those of figures 1 and 2 for an embodiment version of the plant.

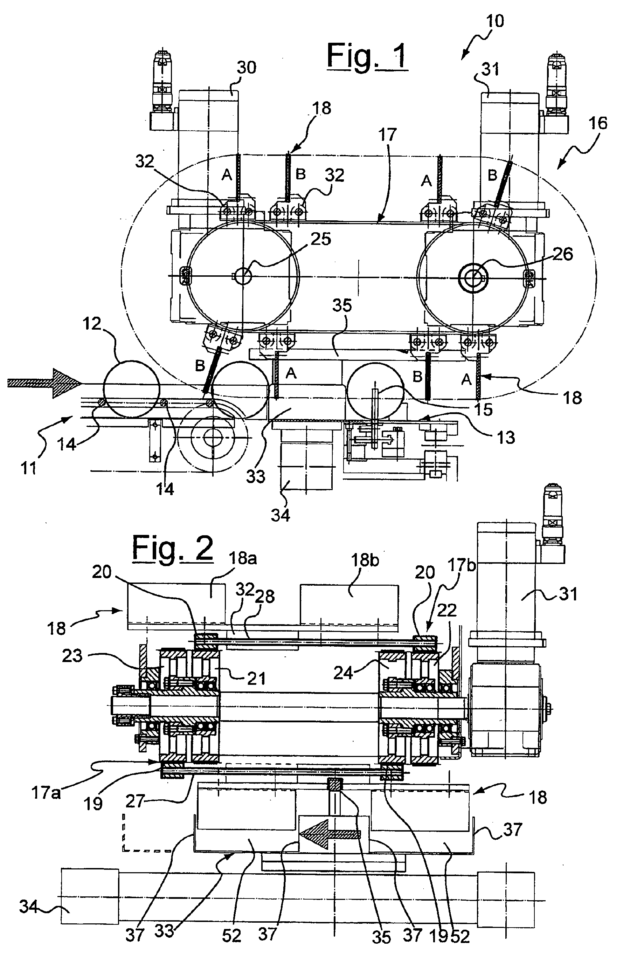

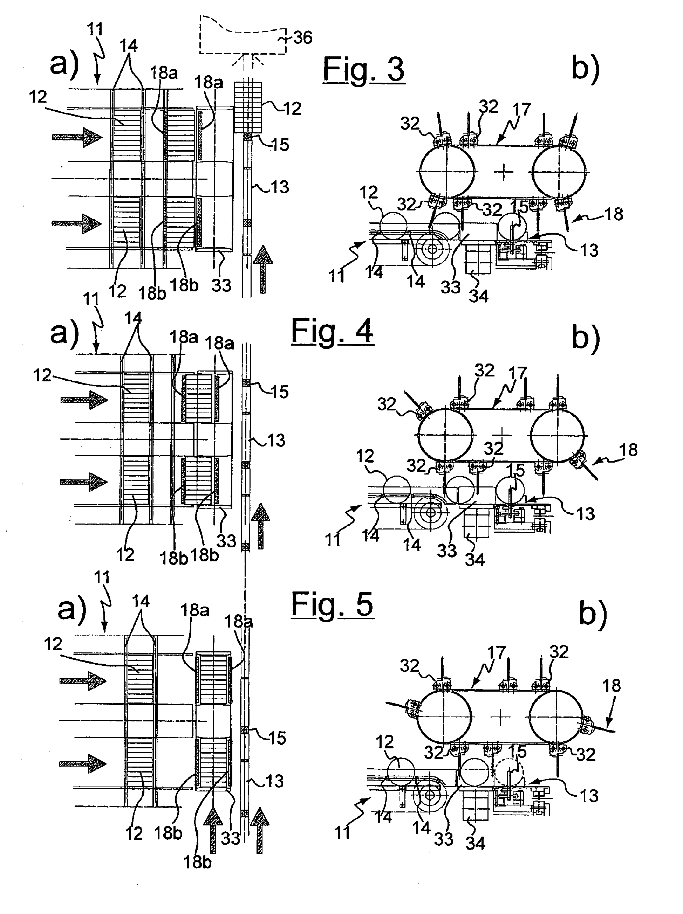

With reference to the figures, figure 1 schematically shows a plant, generally indicated with reference numeral 10, for feeding groups of products to a known packaging machine (schematically indicated with reference numeral 36 in figure 3a).

The plant comprises an input conveyor 11 for the arrival of products 12 and an output conveyor 13 for discharging groups of products in a crosswise direction relative to that of arrival. A transfer device 16 is provided between the two conveyors.

In the plant shown in figure 1, products 12 are biscuits or the like, fed in groups of vertically lined up products arranged side by side, and the input conveyor 11 is a known type forming a feeding bench with slats 14. In the plant described, the groups of products (each representing a portion to be packaged) advance in flanked pairs, forming two feeding channels towards the transfer device 16. For this reason, device 16 is dual.

The two flanked groups must be inserted into two sequentially aligned positions along the output conveyor.

The groups of products that advance (at a constant speed) on the input conveyor must be inserted between thrusters 15 of the output conveyor 13 forming an input bench of a known flow-pack packaging machine. The packaging machine bench has a transversal direction relative to the moving direction of conveyor 11.

Thrusters 15 generally move at a high and constant speed and the transfer device 16 must transfer the groups of products minimizing the shocks due to the sudden change in direction, which such products undergo.

For the guided transfer, device 16 comprises a belt moving unit 17 that moves paddle elements 18. In particular, the paddles have an active transfer path of the products between a pick up point downstream of the input conveyor 11 and a delivery point in the output conveyor 13. Along the active path, the paddles are hanging over the product transfer zone between the conveyors.

As is clear also from figure 1, the paddles are used in pairs for arranging one in front and one behind each group of products to be moved along the transfer path. The paddles are translatable transversely to the transfer path.

The transfer device 16 also comprises a shuttle 33 that is movable in a limited manner in a direction parallel to the output conveyor 13 by means of a linear actuator 34 (advantageously with brushless motor).

The shuttle has such dimensions as to contain, support and separately guide the two portions of products fed in parallel by the slat bench 11.

In particular, for each channel, the shuttle has side containment walls 37 (in crosswise direction relative to the arrival direction on bench 11) of the group of products between which the paddles are received, which move in the product transfer path.

As shall appear clearly hereinafter, the shuttle can thus pull, or aid in laterally pulling, the paddles that enter therein and unload the products in a synchronized manner with the output conveyor. To allow the side translation of the paddles, they are advantageously supported by trolleys 32 that slide along transversal shafts 27, 28 moved by the moving unit 17.

As is clear also from figure 2, and as will be better explained hereinafter, the belt moving devices 17 advantageously are two separate belt moving devices, i.e. a belt moving device 17a for one paddle in the pair and a belt moving device 17b for the other paddle in the pair. The two moving devices are parallel and independently motorized with motors 30, 31 (advantageously, brushless motor reduction units) and the motor control is suitably synchronized by a per se known control unit (not shown).

As will be clear hereinafter, thanks to the independent movement of the two paddles in each pair it is possible to form the pairs at the start of the movement path.

At the end of the product movement path, the two paddles of the pairs can be separated. The paddles alternately become either rear thruster or front counter-thruster of a pair. Advantageously, the front paddle (in the movement direction of the products) proceeds in its movement direction for following the looped path of the respective moving device and then going back to the start of the movement zone as rear thruster paddle. The rear paddle, on the other hand, pulls back to become the front paddle for the subsequent group of products at the start of the movement path.

Any interference is thus prevented, and the plant movements are simplified and speeded up.

With reference to figure 2, each moving system or unit 17a and 17b in turn comprises a pair of parallel toothed belts, respectively 19 and 20. Each pair winds around respective toothed pulleys 21, 22 and 23, 24, which are arranged coaxial at the two ends of the motion path formed by the paddles. The pulleys of each end are mounted on a corresponding motorized coaxial shaft 25 or 26.

Shafts 27, 28 are fixed between the two belts that make up the pair moved by the same motor, and slidingly support the paddles, advantageously positioned at constant pitch along the extension of the belts themselves.

Therefore, there are two groups of paddle elements: group 'A' driven by motor 30 and group 'B' driven by motor 31.

Elements A and B are arranged in alternating positions along the belt perimeter.

Each paddle is supported on the shafts by a respective trolley 32 that allows sliding along the shafts, but not a rotation. To this end, the shafts may have a suitably shaped section or, as visible in the figures, they may be used in pairs for each trolley.

As visible again in figure 2, in the embodiment with two parallel channels 52 of arrival of the products, the paddles are advantageously divided into paddles 18a and 18b to simultaneously act on the products arriving from both channels, using a same moving device.

Thanks to the moving device system with the cross shafts and the trolleys, the paddle thrusters move, controlled by the motor reduction units, in a direction that is parallel to the input conveyor 11 (and thus, perpendicular to conveyor 13), but they may also slide by a limited extent in a direction parallel to conveyor 13.

The linear actuator 34 moves the shuttle in a direction parallel to conveyor 13 directed towards the packaging machine. The shuttle may slide on linear guides with a good stiffness and is capable of having acceleration up to reaching the speed of the thrusters of conveyor 13, so as to allow transferring of the products between them with minimal shock.

A linear cam 35 of suitable length is fixed to the shuttle so that when the paddle thrusters are in the bottom horizontal movement stroke they engage the cam. When the shuttle translates, the paddles engaged with the cam therefore follow the movement of the shuttle and translate laterally together with the shuttle itself.

The combination of two perpendicular movements accompanying the products, provided for by the paddles and by the shuttle respectively, is obtained in this way. In the central accompanying step, the group of products is confined on the four sides, thanks to the paddles and the shuttle walls. Sliding of products is reduced by the fact that the side translation takes place within the shuttle, which forms the bottom of the support surface of the moving group of products.

Figures 3 to 11 show an advantageous transfer sequence from the input conveyor to the output conveyor. The figures indicated with a) show a schematic top view and the figures indicated with b) show a schematic side view.

At the start of the sequence (figure 3), a pair of paddles picks up the (or each) group of products coming from the input conveyor, while the shuttle is aligned therewith. Continuing the paddle motion, the products start being introduced in the shuttle (figure 4). Once the introduction is complete (figure 5), the group of products is confined on the four sides by the paddles and by the relative shuttle walls. The shuttle can thus start the translation in the moving direction of the output conveyor to synchronize therewith.

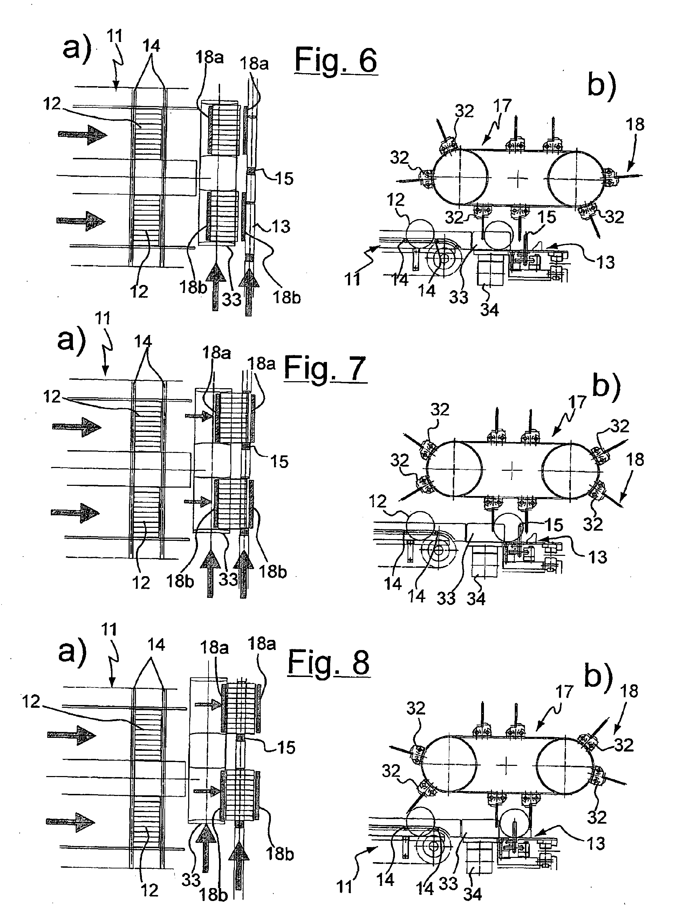

During the synchronization movement, the paddles continue the stroke while they are laterally pulled by the shuttle to move therewith, so as to start the products ejection towards the output conveyor 13 (figure 6).

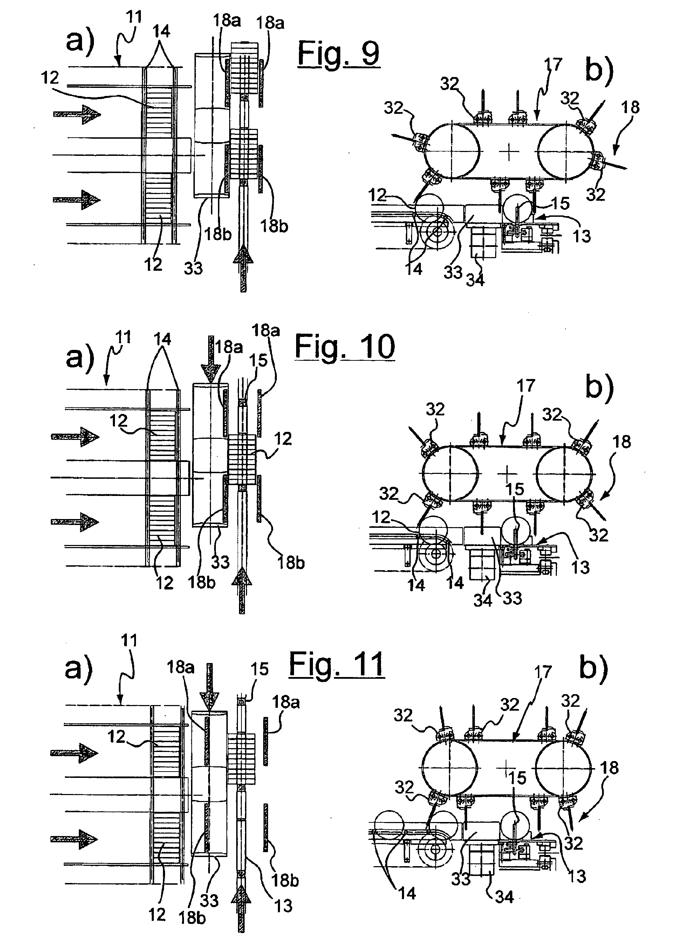

The final part of the transfer in the output conveyor 13 of the flow-pack machine takes place at a programmable longitudinal advancing speed (up to being equal to the flow-pack chain speed) so as to prevent the violent impact of the products with the thruster of the output conveyor 13 when the products enter the conveyor (figures 7 and 8). The paddle movement continues up to the complete insertion of products into conveyor 13 and the abandonment of the shuttle (figure 9). The two groups of products are then carried towards the packaging machine, while two more groups of products are arriving from the input conveyor. While the output conveyor completes the product discharge, the shuttle returns to the starting position, bringing the paddles back to align with the product arrival channels (figure 10).

According to the further aspect of the invention, the front paddle continues the movement to return (after a certain number of sequences) to the starting position as rear thruster of a pair. At the same time, the paddle that was rear thruster pulls back, so as to become the front counter-thruster of the subsequent pair of paddles (figure 11).

Device 16 therefore returns to the initial condition of figure 3 and the two new groups of products arrived from the input conveyor can be picked up and carried towards the output conveyor, repeating the same sequence described above.

Thanks to the principles of the invention, it is possible to minimize the distance between products transferring from the slat bench to the flow-pack conveyor (in the example it is about 150 mm).

Moreover, the transfer can take place with a control of optimized accelerations and maximum speeds adopting the best compromise of combination of the transversal and longitudinal advancing speed. This allows obtaining the softest possible combination for every single format ("soft transfer" system). The movement (in the example with a stroke of around 150 mm) that is transversal to the output conveyor takes place controlling the group of products both in the thrust and in the stop step, so that the group deceleration does not generate the launch and detachment of the group itself but its speed gradually decreases by the counter-thruster formed by the front paddle.

The longitudinal transfer (that is, in the accompanying direction with the chain/conveyor of the flow-pack) takes place by the suitable plane of the sliding shuttle and with the containment walls thereof, so that the group of products is contained from the base and almost by the entire product height, not just by a portion from the top (generally, only by half the height in other systems). Moreover; the platform whereon the products rest, moving integrally with the walls, prevents frictions of the product base and eliminates the natural tendency of the products to tilt. Other systems, that drag the products encapsulating them from the top on the four sides and by half height only, in addition to the rubbing to the product base cause greater deterioration and greater dirt deposits, especially for chocolate-coated products. Moreover, known systems that encapsulate from the top are not as suitable for very short products or with a considerable dimensional irregularity or with non-flat faces (for example a convex face, such as the products called "Cake J1" in the field or the like).

In the plant described, all the movements of the translation device take place with the use of three motors (advantageously, brushless) controlled in electrical axis and they can be coordinated by the standard control unit of the packaging machine. All the format parameters may be stored.

The parts to be replaced for a format change are limited and very simple (shuttle walls, thruster and counter-thruster). Of course, several changes may be devised without departing from the scope of the invention.

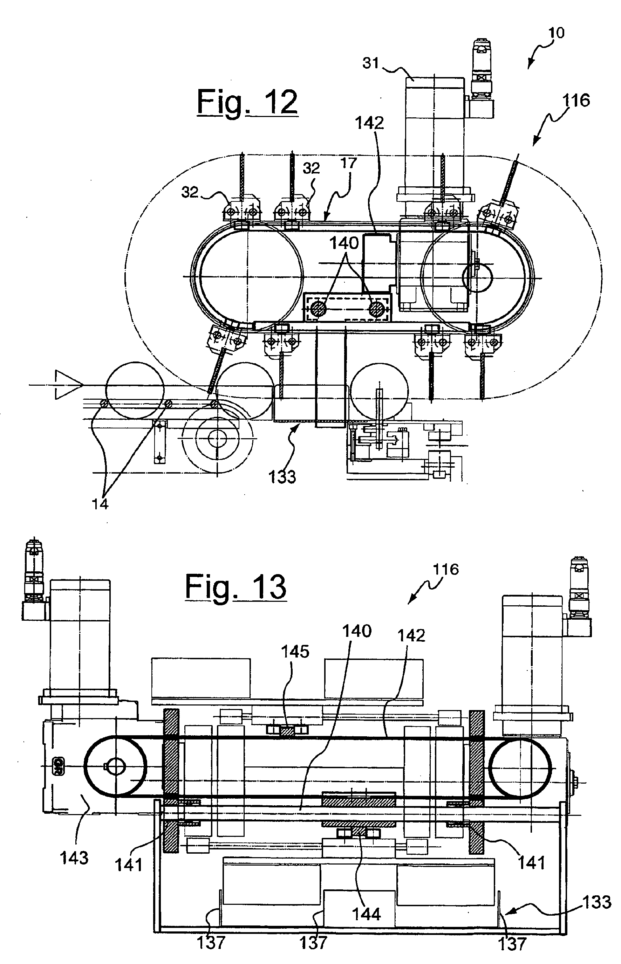

Figures 12 and 13 show an embodiment version according to which the shuttle (indicated with reference numeral 133) is structurally integrated with the top paddle moving system. In such embodiment version (wherein the transfer device is indicated with reference numeral 116), the shuttle hangs on cross guides 140 arranged between the branches of the belt moving devices (substantially equal to those already described above and thus not described anymore) of the paddles. The guides slide in seats 141 of the frame of device 116. The shuttle is translated on the frame by a motorized unit that comprises a toothed belt 142 and a control motor 143. The bottom branch of belt 142 also moves a respective linear cam 144 that fits into the trolleys of the paddles travelling along the bottom branch (of product movement) of the paddle belt moving devices. In this way, the paddles in the bottom branch are translated along with the shuttle. After the repositioning of the paddles at the end of the transport stroke (similar to what already described above), the paddles that cover the rotation on the pulleys and the top return branch are advantageously guided by a cam 145 to remain in the correct position for the new cycle.

Alternatively, cam 145 may be moved by the top branch of belt 142.

This allows, for example, further speeding up the product transfer.

A dual unit is shown in the plant described, provided with two feeding channels (for example, twelve meshes of a packaging machine pitch equal to 152.4 mm).

In a complete plant, the number of channels may vary.

Advantageously, the overhead transfer unit consisting of the belt transfer device, may be constructed so as to be liftable to provide good accessibility to the underlying zone, for example for maintenance operations. The lifting may be manual with the aid of a gas spring. A pneumatic cylinder may be provided for locking the unit in working position.

Of course, the above description of embodiments applying the innovative principles of the present invention is given by way of an example of such innovative principles and should not therefore be taken as a limitation of the scope of protection claimed herein. Changes and/or further devices known to the man skilled in the art may be provided in the plant, according to the practical requirements. In the text, "belt moving device" is meant to include, besides the use of toothed belts, also chains, smooth belts, etc.

The number of concurrent transfer channels of products may be varied from one to any number deemed suitable, as will be easily appreciated by the man skilled in the art. Several known systems may be used for making the products arrive in the desired position on the input conveyor. The conveyor may be constructed in one of many known shapes, too, according to the specific requirements.

The number of products in each group may of course be varied according to the practical requirements, up to having groups even with a single product (especially for products extending in a direction of the conveyors). The paddles may also have a transport movement other than that shown, although that described has been found particularly advantageous to prevent interferences and speed up the operations.

## Claims

1. Plant for feeding food products in sequence to a packaging machine, comprising a first input conveyor (11) and a second output conveyor (13) for conveying towards the packaging machine, with it being foreseen that, between first and second conveyor, there is a synchronized transfer device (16, 116) of groups of products between the two conveyors, the transfer device (16, 116) comprising a moving unit (17) that moves a sequence of elements (18) for transferring individual groups of products along a transfer path towards and into the output conveyor (13), the transfer elements being supported so as to be able to translate transversally to the direction of the input conveyor (11) and the transfer device (16, 116) also having a shuttle (33, 133) with side walls (37, 137), which is arranged along said transfer path and which slides parallel to the direction of movement of the second conveyor (13), said shuttle (33, 133) receiving, between the walls, the transfer elements (18) that move along the transfer path with a group of products and translating them transversally with the group of products in it in a direction parallel to the direction of sliding of the second conveyor (13) so that as the movement of the transfer elements towards the second conveyor (13) proceeds, the group of products is released onto the second conveyor (13) with movement synchronized with the sliding of the second conveyor, **characterized in that** the moving unit (17) is designed to pick up the individual groups of products from the first conveyor (11), **in that** the transfer elements are made of pairs of paddle elements (18) for receiving said individual groups of products between the paddles of each pair and transferring them towards the second conveyor (13) and **in that** the output conveyor (13) is transversal to the input conveyor (11).

2. Plant according to claim 1, **characterized in that** for the transversal translation of the paddles (18) they are supported at the moving unit (17) by means of respective trolleys (32) sliding on shafts (27, 28) transversal to the transfer path and moved by the moving unit (17).

3. Plant according to claim 2, **characterized in that** it comprises a linear cam (35) connected to the shuttle (33) to move paddle elements (18) present along the transfer path in synchrony with the sliding of the shuttle.

4. Plant according to claim 2, **characterized in that** it comprises a unit (142, 143) with motorized belt to move the shuttle (133), the belt (142) of the unit supporting a linear cam (144) to move, synchronously with a shuttle, also paddle elements present along the transfer path.

5. Plant according to claim 1, **characterized in that** the moving unit is formed of two parallel and independently motorized belt moving devices (17a, 17b) to move in synchrony along a looped path, each moving device moving a sequence of paddles that alternatively form a rear thruster or a front counter-thruster of the pairs of paddles.

6. Plant according to claim 5, **characterized in that** the two moving devices (17a, 17b) are synchronized so as to cyclically form, with respective paddle elements (18) at the start of the transfer path, a rear thruster and front counter-thruster pair that receives a group of arriving products between them and transfers them towards the output conveyor (13), and at the end of the transfer path the element (18) that forms the front counter-thruster proceeds along a return part of the looped path to go back to the start of the transfer path and become the rear thruster of a subsequent pair, and the element (18) that forms the rear thruster of the pair pulls back along the transfer path to go back to the start and become the counter-thruster of a subsequent pair.

7. Plant according to claim 5, **characterized in that** each belt moving device (17a, 17b) comprises two flanked belts (19 or 20) with transversal shafts (27, 28) between them that support the paddle elements (18) and that allow the translation of the elements along the shafts to follow the sliding movement of the shuttle (33).

8. Plant according to claim 1, **characterized in that** it comprises on the input conveyor and in the transfer device two or more flanked channels (52) for feeding products or groups of products to simultaneously release two or more groups of products in immediately successive positions along the second conveyor (13).

9. Plant according to claim 1, **characterized in that** the output conveyor (13) has thrusters (15) between which the groups of products must be inserted.

10. Plant according to claim 1, **characterized in that** the input conveyor (11) is adapted to convey a sequence of groups (12) of products lined up and arranged side by side that are received by the transfer device (16, 116) to be transferred to the output conveyor (13).

## Patentansprüche

1. Anlage zum aufeinanderfolgenden Zuführen von Lebensmittelprodukten zu einer Verpackungsmaschine, die einen ersten Eingangsförderer (11) und einen zweiten Ausgangsförderer (13) zum Fördern in Richtung der Verpackungsmaschine umfasst, wobei vorgesehen ist, dass sich zwischen dem ersten und dem zweiten Förderer eine synchronisierte Vorrichtung (16, 116) für den Transfer von Produktgruppen zwischen den zwei Förderern befindet, wobei die Transfervorrichtung (16, 116) eine Bewegungseinheit (17) umfasst, die eine Folge von Elementen (18) zum Transferieren einzelner Produktgruppen längs eines Übergabewegs zu dem und in den Ausgangsförderer (13) bewegt, wobei die Transferelemente so gelagert sind, dass sie sich quer zur Richtung des Eingangsförderers (11) verschieben können, und die Transfervorrichtung (16, 116) außerdem einen Transferwagen (33, 133) mit Seitenwänden (37, 137) aufweist, der längs des Übergabewegs angeordnet ist und der parallel zur Bewegungsrichtung des zweiten Förderers (13) gleitet, wobei dieser Transferwagen (33, 133) zwischen den Wänden die Transferelemente (18) empfängt, die sich längs des Übergabewegs mit einer Produktgruppe bewegen, und sie in Querrichtung mit der Produktgruppe darin in eine zur Gleitrichtung des zweiten Förderers (13) parallele Richtung verschiebt, so dass mit sich fortsetzender Bewegung der Transferelemente in Richtung des zweiten Förderers (13) die Produktgruppe mit einer mit dem Gleiten des zweiten Förderers synchronisierten Bewegung auf den zweiten Förderer (13) abgegeben wird, **dadurch gekennzeichnet, dass** die Bewegungseinheit (17) gestaltet ist, um die einzelnen Produktgruppen vom ersten Förderer (11) aufzunehmen, dass die Transferelemente aus Paaren von Schaufelelementen (18) zum Aufnehmen der einzelnen Produktgruppen zwischen den Schaufeln von jedem Paar und zum Transferieren derselben zum zweiten Förderer (13) bestehen, und dass der Ausgangsförderer (13) quer zum Eingangsförderer (11) angeordnet ist.

2. Anlage nach Anspruch 1, **dadurch gekennzeichnet, dass** die Schaufeln (18) für ihre Querverschiebung an der Bewegungseinheit (17) mit Hilfe von jeweiligen Wagen (32) gelagert sind, die auf Wellen (27, 28) quer zum Übergabeweg gleiten und von der Bewegungseinheit (17) bewegt werden.

3. Anlage nach Anspruch 2, **dadurch gekennzeichnet, dass** sie einen Linearnocken (35) umfasst, der mit dem Transferwagen (33) verbunden ist, um die längs des Übergabewegs vorhandenen Schaufelelemente (18) synchron mit dem Gleiten des Transferwagens zu bewegen.

4. Anlage nach Anspruch 2, **dadurch gekennzeichnet, dass** sie eine Einheit (142, 143) mit einem angetriebenen Band zum Bewegen des Transferwagens (133) umfasst, wobei das Band (142) der Einheit einen Linearnocken (144) trägt, um synchron mit einem Transferwagen auch Schaufelelemente zu bewegen, die sich längs des Übergabewegs befinden.

5. Anlage nach Anspruch 1, **dadurch gekennzeichnet, dass** die Bewegungseinheit aus zwei parallelen und unabhängig angetriebenen Bandbewegungsvorrichtungen (17a, 17b) für die synchrone Bewegung entlang einer endlosschleifenförmigen Bahn gebildet ist, wobei jede Bewegungsvorrichtung eine Folge von Schaufeln bewegt, die abwechselnd einen hinteren Schieber oder einen vorderen Gegenschieber aus den Schaufelpaaren bilden.

6. Anlage nach Anspruch 5, **dadurch gekennzeichnet, dass** die zwei Bewegungsvorrichtungen (17a, 17b) so synchronisiert sind, dass sie zyklisch mit jeweiligen Schaufelelementen (18) am Anfang des Übergabewegs ein Paar aus einem hinteren Schieber und einem vorderen Gegenschieber bilden, das eine Gruppe ankommender Produkte zwischen diesen empfängt und sie zum Ausgangsförderer (13) transferiert, und dass am Ende des Übergabewegs das Element (18), das den vorderen Gegenschieber bildet, seinen Weg entlang einem Rückkehrabschnitt der endlosschleifenförmigen Bahn fortsetzt, um zum Anfang des Übergabewegs zurückzukehren und der hintere Schieber eines darauffolgenden Paares zu werden, und dass sich das Element (18), das den hinteren Schieber des Paares bildet, längs des Übergabewegs zurückzieht, um zum Anfang zurückzukehren und der Gegenschieber eines darauffolgenden Paares zu werden.

7. Anlage nach Anspruch 5, **dadurch gekennzeichnet, dass** jede Bandbewegungsvorrichtung (17a, 17b) zwei benachbarte Bänder (19 oder 20) mit Querwellen (27, 28) zwischen ihnen umfasst, welche die Schaufelelemente (18) tragen und die Verschiebung der Elemente längs der Wellen ermöglichen, um der Gleitbewegung des Transferwagens (33) zu folgen.

8. Anlage nach Anspruch 1, **dadurch gekennzeichnet, dass** sie auf dem Eingangsförderer und in der Transfervorrichtung zwei oder mehrere benachbarte Kanäle (52) zum Zuführen von Produkten oder Produktgruppen umfasst, um gleichzeitig zwei oder mehrere Produktgruppen in unmittelbar aufeinanderfolgenden Positionen entlang dem zweiten Förderer (13) abzugeben.

9. Anlage nach Anspruch 1, **dadurch gekennzeichnet, dass** der Ausgangsförderer (13) Schieber (15) aufweist, zwischen die die Produktgruppen eingeführt werden müssen.

10. Anlage nach Anspruch 1, **dadurch gekennzeichnet, dass** der Eingangsförderer (11) geeignet ist, eine Folge von ausgerichteten und nebeneinander angeordneten Produktgruppen (12) zu befördern, die von der Transfervorrichtung (16, 116) entgegengenommen werden, um zum Ausgangsförderer (13) transferiert zu werden.

## Revendications

1. Installation pour alimenter une machine de conditionnement en séquence avec des produits alimentaires, comprenant un premier convoyeur d'entrée (11) et un deuxième convoyeur de sortie (13) pour le transport vers la machine de conditionnement, étant prévu avec ceci que, entre les premier et deuxième convoyeurs, un dispositif de transfert synchronisé (16, 116) de groupes de produits entre les deux convoyeurs soit prédisposé, le dispositif de transfert (16, 116) comprenant un dispositif de déplacement (17) qui déplace une séquence d'éléments (18) pour le transfert de groupes de produits individuels le long d'un trajet de transfert vers et dans le convoyeur de sortie (13), les éléments de transfert étant supportés de manière à pouvoir être capables de se déplacer par translation transversalement à la direction du convoyeur d'entrée (11) et le dispositif de transfert (16, 116) comprenant également une navette (33, 133) avec des parois latérales (37, 137), qui est disposée le long dudit trajet de transfert et qui coulisse parallèlement à la direction de mouvement du deuxième convoyeur (13), ladite navette (33, 133) recevant, entre les parois, les éléments de transfert (18) qui se déplacent le long du trajet de transfert avec un groupe de produits et faisant effectuer à ceux-ci une translation avec le groupe de produits dans celle-ci transversalement dans une direction parallèle à la direction de coulissement du deuxième convoyeur (13) de manière que le mouvement des éléments de transfert vers le deuxième convoyeur (13) se poursuive, le groupe de produits est relâché sur le deuxième convoyeur (13) avec un mouvement synchronisé avec le coulissement du deuxième convoyeur, **caractérisé en ce que** l'unité de déplacement (17) est conçue pour prélever les groupes de produits individuels à partir du premier convoyeur (11), **en ce que** les éléments de transfert sont constitués de paires d'éléments à palette (18) pour recevoir lesdits groupes de produits individuels entre les palettes de chaque paire et les transférer vers le deuxième convoyeur (13) et **en ce que** le convoyeur de sortie (13) est transversal par rapport au convoyeur d'entrée (11).

2. Installation selon la revendication 1, **caractérisée en ce que**, pour la translation transversale des palettes (18), celles-ci sont supportées au niveau de l'unité de déplacement (17) au moyen de chariots respectifs (32) coulissant sur des arbres (27, 28) transversaux par rapport au trajet de transfert et déplacés par l'unité de déplacement (17).

3. Installation selon la revendication 2, **caractérisée en ce qu'**elle comprend une came linéaire (35) connectée à la navette (33) pour déplacer des éléments à palette (18) présents le long du trajet de transfert en synchronisme avec le coulissement de la navette.

4. Installation selon la revendication 2, **caractérisée en ce qu'**elle comprend une unité (142, 143) avec courroie motorisée pour déplacer la navette (133), la courroie (142) de l'unité supportant une came linéaire (144) pour déplacer également, de manière synchronisée avec une navette, des éléments à palette présents le long du trajet de transfert.

5. Installation selon la revendication 1, **caractérisée en ce que** l'unité de déplacement est formée de deux dispositifs de déplacement par courroie parallèles et motorisés indépendamment (17a, 17b) pour se déplacer en synchronisme le long d'un parcours en boucle, chaque dispositif de déplacement déplaçant une séquence de palettes qui forment alternativement un pousseur arrière ou un contre-pousseur avant des paires de palettes.

6. Installation selon la revendication 5, **caractérisée en ce que** les deux dispositifs de déplacement (17a, 17b) sont synchronisés de manière à former cycliquement, avec des éléments à palette respectifs (18) au début du trajet de transfert, une paire de pousseur arrière et de contre-pousseur avant qui reçoit un groupe de produits arrivants entre ceux-ci et les transfère vers le convoyeur de sortie (13), et, à la fin du trajet de transfert, l'élément (18) qui forme le contre-pousseur avant poursuit le long d'une partie de retour du parcours en boucle pour revenir au début du trajet de transfert et devenir le pousseur arrière d'une paire successive, et l'élément (18) qui forme le pousseur arrière de la paire se déplace en arrière le long du trajet de transfert pour revenir au début et devenir le contre-pousseur d'une paire successive.

7. Installation selon la revendication 5, **caractérisée en ce que** chaque dispositif de déplacement par courroie (17a, 17b) comprend deux courroies encadrées (19 ou 20) avec des arbres transversaux (27, 28) entre elles qui supportent les éléments à palette (18) et qui permettent la translation des éléments le long des arbres pour suivre le mouvement de coulissement de la navette (33).

8. Installation selon la revendication 1, **caractérisée en ce qu'**elle comprend, sur le convoyeur d'entrée et dans le dispositif de transfert, deux ou plusieurs canaux bordés (52) pour alimenter des produits ou des groupes de produits pour relâcher simultanément deux ou plusieurs groupes de produits dans des positions immédiatement successives le long du deuxième convoyeur (13).

9. Installation selon la revendication 1, **caractérisée en ce que** le convoyeur d'entrée (13) a des pousseurs (15) entre lesquels les groupes de produits doivent être insérés.

10. Installation selon la revendication 1, **caractérisée en ce que** le convoyeur d'entrée (11) est adapté pour acheminer une séquence de groupes (12) de produits alignés et disposés côte à côte qui sont reçus par le dispositif de transfert (16, 116) pour être transférés au convoyeur de sortie (13).
